# FASCICULE DE BREVET EUROPEEN

(11) **EP 2 068 409 B1**
(45) Date de publication et mention de la délivrance du brevet: **23.05.2012**
(21) Numéro de dépôt: 08291057.1
(22) Date de dépôt: 12.11.2008
(51) Int. Cl.: H02G 3/06

(54) **Accessoire d'angle pour goulottes à volets pivotants**
Winkelelement für Ablaufrinnen mit Schwenkklappen
Corner accessory for gutters with swinging flaps

(30) Priorité: 06.12.2007 FR 0708522
(43) Date de publication de la demande: 10.06.2009
(73) Titulaire: Legrand France, 87000 Limoges (FR)
(72) Inventeur: Wents, Thierry, 72650 La Bazoge (FR)
(74) Mandataire: Orsini, Fabienne

(56) Documents cités:
- EP-A- 1 530 273
- DE-U1-202005 012 520

## Description

### DOMAINE TECHNIQUE AUQUEL SE RAPPORTE L'INVENTION

La présente invention concerne de manière générale, les goulottes du type de celles mises en oeuvre, par exemple, pour le support, le logement et la protection de divers appareillages, tels que des appareillages électriques, aussi bien que pour le support, le logement et la protection des câbles, conducteurs, canalisations ou autres équipements nécessaires à la desserte de ces appareillages.

Elle concerne plus particulièrement un accessoire d'angle à disposer à la jonction d'au moins deux goulottes d'orientations différentes, comprenant deux volets distincts dont l'un comporte un élément saillant et dont l'autre comporte une ouverture circulaire accueillant ledit élément saillant pour autoriser un pivotement desdits volets autour d'un axe de pivotement, le bord circulaire de ladite ouverture étant localement ouvert sur une fente droite qui s'étend radialement par rapport au bord circulaire de ladite ouverture et qui débouche sur un bord libre dudit volet.

L'invention trouve une application particulièrement avantageuse dans la réalisation d'accessoires d'angle intérieur ou extérieur pour goulottes.

### ARRIERE-PLAN TECHNOLOGIQUE

On connaît déjà notamment du document IT 01281834, un accessoire d'angle dont une joue comporte à une extrémité de ses retours des oreilles en vis-à-vis qui portent des tétons destinés à être insérés dans des ouvertures circulaires prévues dans les retours de l'autre joue.

L'assemblage des joues entre elles est réalisé en pinçant légèrement les retours de la joue portant lesdites ouvertures pour déformer élastiquement lesdits retours et engager lesdites ouvertures sur lesdits tétons.

Ainsi, lesdites joues peuvent prendre différentes positions angulaires relatives comprises entre une première position extrême dans laquelle la joue portant les tétons découvre au maximum l'autre joue pour former un angle inférieur ou égal à 90° et une deuxième position extrême dans laquelle la joue portant les tétons est complètement rabattue sur l'autre joue pour former un angle supérieur à 90°.

En outre, selon ce document, chacune desdites oreilles portant les tétons de la joue correspondante présente un bord circulaire pourvu d'un biseau qui, lorsque ladite joue est dans la deuxième position extrême complètement rabattue sur l'autre joue, est destiné à coopérer avec un coin prévu en creux, au voisinage de l'ouverture, sur la surface externe du retour de la joue correspondante. Cette coopération des biseaux avec les coins évite que, dans cette deuxième position extrême, un choc intervenant sur lesdites joues provoque la sortie des tétons desdites ouvertures et donc le désassemblage desdites joues.

Un tel accessoire présente plusieurs inconvénients.

Tout d'abord l'assemblage des deux volets de l'accessoire est délicat car il nécessite une déformation desdits volets et l'alignement en aveugle des tétons et des ouvertures respectifs.

En outre, afin de limiter la déformation nécessaire du volet comportant lesdites ouvertures et faciliter ainsi l'assemblage des volets, les tétons prévus sur l'autre volet présentent une hauteur diminuée. Ainsi, lorsqu'un choc intervient sur lesdits volets, il provoque facilement la sortie des tétons desdites ouvertures et donc le désassemblage des volets. En effet, mise à part l'agencement de biseaux et de coins, l'accessoire ne comporte aucun moyen pour éviter que, dans les positions angulaires relatives desdites joues autres que ladite deuxième position extrême précitée, un choc intervenant sur lesdites joues provoque la sortie des tétons desdites ouvertures et donc le désassemblage desdites joues.

Enfin, le document DE 20 2005 012 520 U décrit un accessoire d'angle extérieur ou intérieur qui comporte deux volets identiques distincts, articulés l'un à l'autre par l'intermédiaire d'un pion prévu sur l'un des volets dont le fût s'engage via une fente dans une ouverture prévue dans l'autre volet. Ici, chaque volet comporte une joue bordée, sur deux côtés opposés, de deux ailes en vis-à-vis, sensiblement à l'équerre de la joue, le pion étant prévu sur la face intérieure d'une partie de la joue qui recouvre une partie de l'aile pourvue de ladite ouverture de l'autre volet.

### OBJET DE L'INVENTION

Par rapport à l'état de la technique précité, la présente invention propose un accessoire d'angle dont les volets sont agencés de manière à faciliter leur assemblage tout en évitant qu'un choc intervenant sur lesdits volets provoque leur désassemblage quelle que soit leur position relative d'utilisation.

Plus particulièrement, on propose selon l'invention un accessoire selon les caractéristiques de la revendication 1.

Des caractéristiques avantageuses de l'accessoire d'angle selon l'invention sont énoncées dans les revendications 2 à 9.

### DESCRIPTION DETAILLEE D'UN EXEMPLE DE REALISATION

La description qui va suivre en regard des dessins annexés, donnée à titre d'exemple non limitatif, fera bien comprendre en quoi consiste l'invention et comment elle peut être réalisée.

Sur les dessins annexés :
- la figure 1 est une vue schématique du côté intérieur de l'accessoire d'angle selon l'invention disposé à la jonction de deux goulottes d'orientations différentes ;
- la figure 2A est une vue schématique en perspective du côté intérieur d'un des volets de l'accessoire d'angle de la figure 1 ;
- la figure 2B est une vue schématique en perspective du côté intérieur de l'autre des volets de l'accessoire d'angle de la figure 1 ; et
- la figure 3 est une vue schématique d'assemblage des deux volets des figures 2A et 2B vus du côté intérieur.

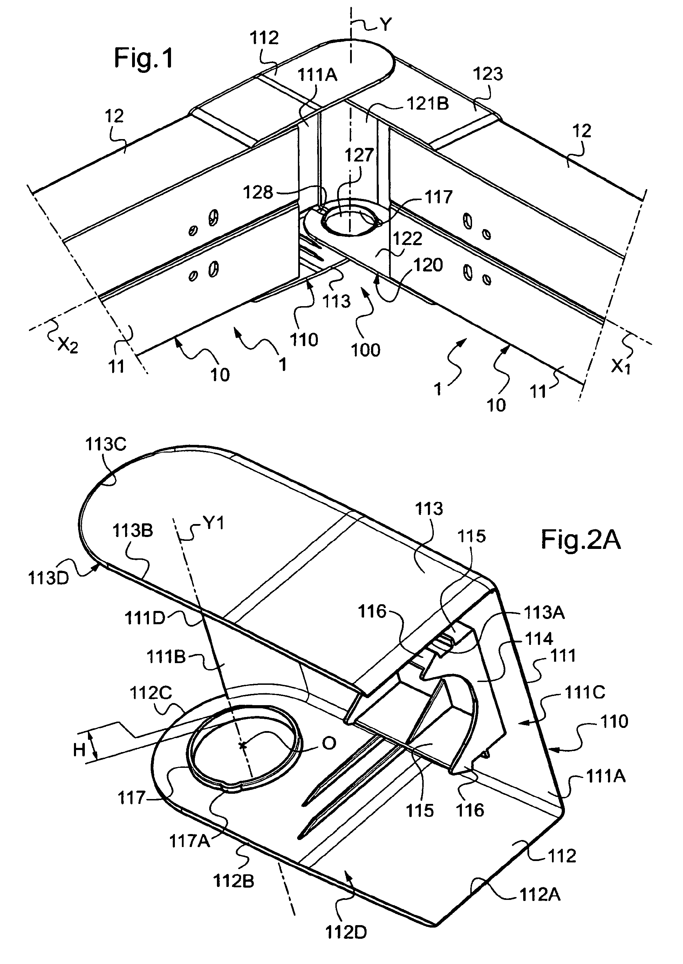

Sur la figure 1, on a représenté un accessoire d'angle 100 disposé à la jonction de deux goulottes 1 d'orientations X1, X2 différentes.

Ici, cet accessoire d'angle 100 est un accessoire d'angle extérieur particulièrement adapté à joindre deux goulottes 1 faisant, en pratique, un angle entre elles compris entre 60 et 95° et préférentiellement égal à 90°.

En considérant deux parois (non représentées) formant un dièdre saillant entre elles, les socles 10 des deux goulottes 1 sont chacun respectivement disposés à plat sur ces deux parois, en courant par exemple en plinthe à la base de celle-ci.

Les socles 10 des goulottes 1 sont coupés et sont positionnés bord à bord, de manière pratiquement jointive au niveau de leur fond, pour former sensiblement l'angle saillant que forment les parois supports entre elles.

Ici, comme le montre plus particulièrement la figure 1, les socles 10 des goulottes 1 ont une section transversale globalement en forme de U avec un fond 11 et deux ailes latérales 12 parallèles qui s'élèvent perpendiculairement audit fond 11 et qui bordent celui-ci.

Entre les deux ailes latérales 12 de chaque socle 10 sont définis une ouverture longitudinale ainsi qu'un espace de réception de divers câbles et appareillages électriques.

L'ouverture longitudinale de chaque socle 10 est fermée par des tronçons de couvercle (non visible sur la figure 1) qui comprennent des pattes d'encliquetage sur des aménagements intérieurs du socle 10.

À cet effet, on peut prévoir que les deux ailes latérales 12 de chaque socle 10 portent en tête des retours (non visibles sur la figure 1) dirigés l'un vers l'autre qui s'étendent sensiblement parallèlement audit fond 11 dans le même plan que les tronçons de couvercle.

En outre, l'ouverture longitudinale de chaque socle 10 de chaque goulotte 1 peut être bordée par deux parois longitudinales rentrantes (non visibles sur la figure 1), parallèles entre elles et aussi parallèles aux deux parois latérales 12 du socle 10. Chaque paroi rentrante est rattachée au bord libre d'un retour en étant perpendiculaire à celui-ci. L'ouverture longitudinale est munie de deux bandes de clipsage (non visibles sur la figure 1) aptes à permettre le montage des tronçons de couvercle.

En particulier, chaque bande de clipsage peut comporter ici une aile longitudinale (non visible sur la figure 1) rattachée par une entretoise (non visible sur la figure 1) à l'extrémité intérieure libre de la paroi rentrante correspondante. Cette entretoise définit avec ladite aile longitudinale et la paroi rentrante, une gorge longitudinale ouverte vers l'avant du socle 10 de la goulotte 1.

Chaque tronçon de couvercle (non visible sur la figure 1) porte perpendiculairement sur sa face arrière, en parallèle, le long de chacun de ses deux bords longitudinaux, d'une part, une rangée de pattes d'engagement destinées à s'engager dans la gorge longitudinale correspondante du socle 10, et, d'autre part, une rangée de pattes d'encliquetage destinées à s'accrocher sous cette gorge longitudinale.

L'accessoire d'angle 100 est un cache qui se substitue localement au tronçon de couvercle de chaque goulotte 1, en recouvrant l'extrémité coupée des ailes latérales 12 desdits socles 10 et des retours correspondants. Il recouvre également, préférentiellement, l'extrémité coupée desdits tronçons de couvercle.

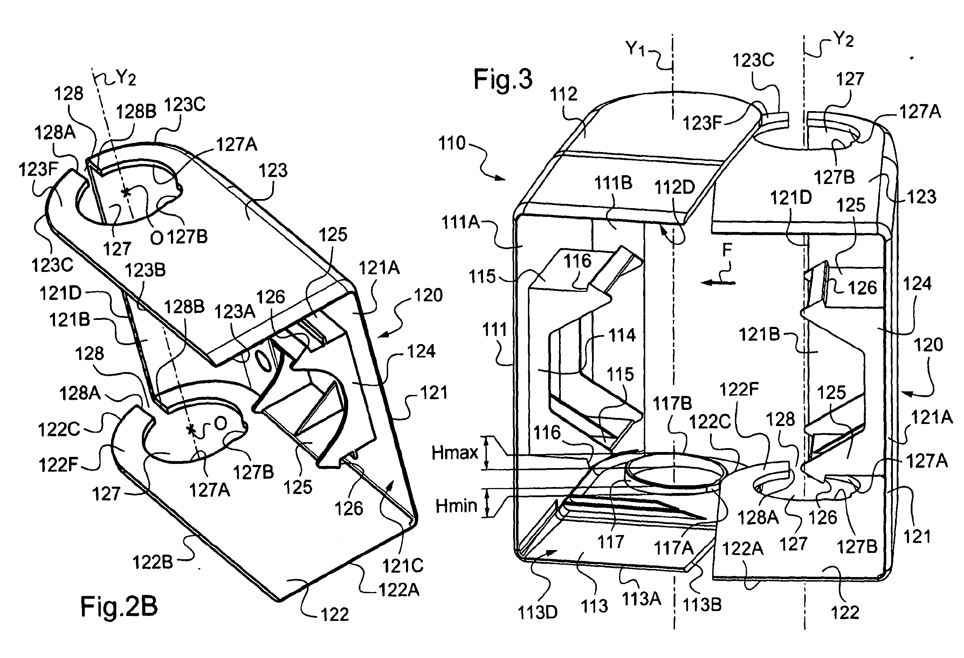

Comme le montrent plus particulièrement les figures 1 et 3, l'accessoire d'angle 100 comporte deux volets 110, 120 distincts assemblés entre eux de manière à autoriser un déplacement à pivotement d'un volet par rapport à l'autre autour d'un axe de pivotement Y.

Chaque volet 110 ; 120 est avantageusement réalisé d'une seule pièce par moulage d'une matière plastique.

Il présente un profil en U avec une joue 111 ; 121 bordée, sur deux côtés opposés, de deux ailes 112, 113 ; 122, 123 en vis-à-vis, sensiblement à l'équerre de ladite joue 111 ; 121 (voir figures 2A, 2B).

La joue 111 ; 121 de chaque volet 110 ; 120 comporte une portion droite 111A ; 121A, destinée à recouvrir l'extrémité coupée d'un tronçon de couvercle d'une des goulottes 1, et une portion arrondie 111 B ; 121 B. La portion arrondie 111 B ; 121 B est une portion de paroi cylindrique au moins en partie superposée à la portion arrondie de l'autre volet pour fermer l'angle formé entre lesdites goulottes 1 (voir figure 1) et assurer ainsi une continuité de couvercles entre les tronçons de couvercle desdites goulottes 1.

Les ailes 112, 113 ; 122, 123 en vis-à-vis de chaque volet 110 ; 120 présentent une forme globalement rectangulaire avec trois bords libres 112A, 112B, 112C, 113A, 113B, 113C ; 122A, 122B, 122C, 123A, 123B, 123C et un bord lié au côté correspondant de ladite joue 111 ; 121 (voir figures 2A et 2B).

Plus particulièrement, chacune des deux ailes 112, 113 ; 122, 123 de chaque volet 110 ; 120 comporte un bord libre 112A, 113A ; 122A, 123A latéral droit qui s'étend perpendiculairement au bord de la portion droite 111A ; 121A de ladite joue 111 ; 121 et un bord libre 112B, 113B ; 122B, 123B longitudinal droit qui se prolonge par un bord libre 112C, 113C ; 122C, 123C latéral arrondi qui se raccorde à un bord libre 111D ; 121D de ladite portion arrondie 111B ; 121 B de ladite joue 111 ; 121 (voir figures 2A et 2B).

Les ailes 112, 113 ; 122, 123 en vis-à-vis de chaque volet 110 ; 120 sont destinées à recouvrir partiellement les ailes latérales 12 des socles 10 des goulottes 1 disposées en angle. En outre, les ailes 112, 113 d'un volet 110 sont en partie superposées aux ailes 123, 122 de l'autre volet 120 pour assurer dans l'angle formé par lesdites goulottes 1 une continuité d'ailes latérales entre lesdites goulottes.

Comme le montrent les figures 2A, 2B et 3, les joues 111 ; 121 desdits volets 110 ; 120 comportent sur leur face intérieure des moyens d'assujettissements qui sont propres au maintien des volets par rapport aux goulottes 1.

Plus particulièrement, la portion droite 111A ; 121A de la joue 111 ; 121 de chaque volet 110 ; 120 porte sur sa face intérieure 111C ; 121C un profilé 114, 124 en U qui comporte deux branches 115 ; 125 parallèles qui s'élèvent perpendiculairement à la face intérieure 111C ; 121C de ladite portion droite 111A ; 121A. Les deux branches 115 ; 125 de chaque profilé 114 ; 124 portent sur des faces opposées, deux dents 116 ; 126 destinées à s'accrocher derrière les entretoises, sous les gorges longitudinales du socle 10 de la goulotte 1 correspondante.

L'un des volets 110 s'accroche ainsi sur le socle 10 d'une goulotte 1 tandis que l'autre des volets 120 s'accroche sur le socle 10 de l'autre goulotte 1.

Selon une caractéristique particulièrement avantageuse de l'accessoire d'angle 100, l'un 110 des volets comporte un élément saillant 117 et l'autre volet 120 comporte une ouverture 127 circulaire accueillant ledit élément saillant 117 pour autoriser un pivotement desdits volets 110 ; 120 autour de l'axe de pivotement Y.

Plus particulièrement comme le montrent les figures 2B et 3, le bord circulaire 127A de ladite ouverture 127 du volet 120 est localement ouvert sur une fente 128 qui débouche sur un bord libre 122C dudit volet 120.

L'élément saillant 117 est prévu sur la face intérieure 113D d'une aile 113 du volet 110 qui recouvre partiellement l'aile 122 pourvue de ladite ouverture 127 circulaire de l'autre volet 120.

Ici, comme le montre la figure 3, l'un 110 desdits volets porte, sur les faces intérieures 112D, 113D en regard de ses ailes 112, 113, deux éléments saillants 117 en vis-à-vis, et l'autre 120 desdits volets comporte, en correspondance, dans ses ailes 123, 122, lesdites ouvertures 127 circulaires ouvertes par lesdites fentes 128 sur des bords libres 123C, 122C du volet 120 recouverts par les ailes 112, 113 du premier volet 110.

Chaque élément saillant est une paroi cylindrique 117 dont le diamètre externe est égal au jeu près au diamètre interne de chaque ouverture 127 circulaire de manière que lors du pivotement d'un volet 110 par rapport à l'autre 120, la face externe de chaque paroi cylindrique 117 glisse sur la tranche du bord circulaire 127A de chaque ouverture 127.

Ici, chaque ouverture 127 circulaire présente un diamètre interne compris entre 2 et 4 cm, préférentiellement égal à environ 3 cm.

Chaque paroi cylindrique 117, formant un élément saillant du volet 110, est placée à proximité du bord libre 112C, 113C latéral arrondi de l'aile 112, 113 correspondante de sorte que les deux parois cylindriques 117 en vis-à-vis sont centrées sur l'axe Y1 de la portion de paroi cylindrique 111B de la joue 111 du volet 110 (voir figures 2A et 3).

Chaque ouverture 127 circulaire du volet 120 est placée à proximité du bord libre 122C, 123C latéral arrondi de l'aile 122, 123 correspondante de sorte que les deux ouvertures 127 circulaires en vis-à-vis sont centrées sur l'axe Y2 de la portion de paroi cylindrique 121B de la joue du volet 120 (voir figures 2B et 3).

Avantageusement, chaque paroi cylindrique 117, formant l'élément saillant sur la face intérieure 112D d'une aile 112 du volet 110, présente une hauteur H qui varie continûment le long de sa circonférence (voir figure 2A).

Plus particulièrement, chaque paroi cylindrique 117 formant un élément saillant correspondant, présente une hauteur maximale Hmax du côté de la face intérieure 111C de ladite joue 111, cette hauteur diminuant progressivement depuis un maximum jusqu'à atteindre une hauteur minimale Hmin du côté du bord libre 113B longitudinal droit de ladite aile 113 du volet 110 (voir figure 3).

Ainsi, chaque paroi cylindrique 117 présente un bord pentu 117B formant une rampe montante de l'extérieur vers l'intérieur du volet 110.

En outre, chaque paroi cylindrique 117 formant un élément saillant correspondant, comporte un bossage 117A en saillie vers l'extérieur, et le bord circulaire 127A de chaque ouverture 127 circulaire comporte dans sa tranche un renfoncement 127B en correspondance (voir les figures 2A, 2B et 3).

Selon l'exemple représenté sur les figures, chaque fente 128 est droite et elle s'étend radialement par rapport au bord circulaire 127A de l'ouverture 127 circulaire correspondante. Ici, chaque fente 128 débouche sur ledit bord libre 122C, 123C latéral arrondi de l'aile 122, 123 correspondante du volet 120 à la jonction avec le bord libre 121D de ladite portion arrondie 121 de la joue 121 du volet 120. Ainsi, un bord 128B de chaque fente 128 rejoint le bord libre 121 D de la portion arrondie 121B de la joue 121 du volet 120 (voir figure 2B).

Ainsi, avantageusement, dans chaque aile 122, 123 du volet 120 correspondant, une patte de montage 122F, 123F élastique est délimitée par un bord 128A de la fente 128, formant le bord libre d'extrémité de ladite patte de montage 122F, 123F, par une partie du bord circulaire 127A de ladite ouverture 127 circulaire prévue dans ladite aile et par une partie du bord libre 122C, 123C latéral arrondi de ladite aile 122, 123 sur lequel débouche ladite fente 128, ces parties dudit bord circulaire 127A et dudit bord libre 122C, 123C latéral arrondi formant les bords longitudinaux arrondis parallèles de ladite patte de montage 122F, 123F.

Comme le montre plus particulièrement la figure 3, l'assemblage des deux volets 110 ; 120 de l'accessoire d'angle 100 s'effectue simplement en engageant latéralement, selon la flèche F, les ailes 122, 123 du volet 120 pourvues desdites ouvertures 127 circulaires à l'intérieur des ailes 113, 112 du volet 110 portant lesdites parois cylindriques 117 formant lesdits éléments saillants.

De cette manière, la face externe de chaque patte de montage 122F, 123F de chaque aile 122, 123 du volet 120, glisse sur le bord pentu 117B de la paroi cylindrique 117 formant l'élément saillant du volet 110. La rampe montante formée par le bord pentu 117B de chaque paroi cylindrique 117 provoque un léger fléchissement élastique de chaque patte de montage 122F, 123F jusqu'à ce qu'elle passe derrière chaque paroi cylindrique 117 du volet 110 et que cette dernière soit alors engagée dans l'ouverture 127 circulaire correspondante du volet 120.

Dans cette position engagée, les axes Y1 et Y2 des portions arrondies 111B ; 121 B des joues 111 ; 121 des volets 110 ; 120 de l'accessoire d'angle 100 sont confondus avec l'axe de pivotement Y autour duquel pivotent les volets et lesdites portions arrondies 111 B, 121B se recouvrent au moins partiellement (voir figure 1).

Il suffit alors de faire glisser les parois cylindriques 117 le long du bord circulaire 127A desdites ouvertures 117 circulaires pour faire pivoter les volets 110 ; 120 l'un par rapport à l'autre autour de l'axe de pivotement Y et faire varier la surface de recouvrement des portions arrondies 111 B ; 121B des joues 111 ; 121. De cette manière, on fait varier l'angle formé entre lesdits volets afin d'ajuster l'ouverture de l'accessoire d'angle 100 à l'angle formé par lesdites goulottes 1 à la jonction desquelles il doit être rapporté.

Lorsque l'accessoire d'angle 100 est en place à la jonction des goulottes 1, la hauteur maximale Hmax des parois cylindriques 117 formant les éléments saillants du volet 110, permet avantageusement d'éviter que, lors d'un choc sur l'accessoire, les pattes de montage 122F, 123F du volet 120 ne passent au-dessus desdites parois cylindriques 117 par déformation élastique, et que lesdits volets 110, 120 ne se désolidarisent par désengagement des éléments saillants et des ouvertures circulaires correspondantes.

Enfin, les bossages 117A desdites parois cylindriques 117 formant les éléments saillants du volet 110 et les renfoncements 127B des bords circulaires 127A des ouvertures 127 circulaires du volet 120, forment des repères à faire coopérer entre eux pour positionner correctement les deux volets 110 ; 120 l'un par rapport à l'autre lors de leur montage ou de leur démontage afin de faciliter les opérations de montage et de démontage.

La présente invention n'est nullement limitée au mode de réalisation décrit et représenté, mais l'homme du métier saura y apporter toute variante dans le cadre des revendications.

## Revendications

1. Accessoire d'angle (100) à disposer à la jonction d'au moins deux goulottes (1) d'orientations différentes, comprenant deux volets (110, 120) distincts dont l'un comporte un élément saillant (117) et dont l'autre comporte une ouverture (127) circulaire accueillant ledit élément saillant pour autoriser un pivotement desdits volets autour d'un axe de pivotement (Y), le bord circulaire (127A) de ladite ouverture (127) étant localement ouvert sur une fente (128) droite qui s'étend radialement par rapport au bord circulaire (127A) de ladite ouverture (127) et qui débouche sur un bord libre (112C) dudit volet (110), **caractérisé en ce que** ledit élément saillant est une paroi cylindrique (117) qui présente, d'une part, un diamètre externe égal au jeu près au diamètre interne de ladite ouverture (127) circulaire de manière que lors du pivotement d'un volet par rapport à l'autre, la face externe de ladite paroi cylindrique (117) glisse sur la tranche du bord circulaire (127A) de ladite ouverture (127), et, d'autre part, une hauteur (H) qui varie le long de sa circonférence.

2. Accessoire d'angle (100) selon la revendication précédente, **caractérisé en ce que** ladite paroi cylindrique (117) comporte un bossage (117A) en saillie vers l'extérieur et le bord circulaire (127A) de ladite ouverture comporte dans sa tranche un renfoncement (127B) en correspondance.

3. Accessoire d'angle (100) selon l'une des revendications précédentes, **caractérisé en ce que** ladite ouverture (127) circulaire présente un diamètre interne compris entre 2 et 4 cm, préférentiellement égal à environ 3 cm.

4. Accessoire d'angle (100) selon l'une des revendications précédentes, **caractérisé en ce que** chaque volet (110 ;120) comporte une joue (111 ; 121) bordée, sur deux côtés opposés, de deux ailes (112,113 ; 122,123) en vis-à-vis, sensiblement à l'équerre de ladite joue (111 ; 121), ledit élément saillant (117) étant prévu sur la face intérieure (113D) d'une aile (113) du volet (110) qui recouvre partiellement l'aile (122) pourvue de ladite ouverture (127) circulaire de l'autre volet (120).

5. Accessoire d'angle (100) selon la revendication précédente, **caractérisé en ce que** l'un (110) desdits volets porte, sur les faces intérieures (112D,113D) en regard de ses ailes (112,113), deux éléments saillants (117) en vis-à-vis, et l'autre (120) desdits volets comporte, en correspondance, dans ses ailes (123,122), lesdites ouvertures (127) circulaires ouvertes par lesdites fentes (128) sur des bords libres (123C,122C) du volet recouverts par les ailes (112,113) du premier volet (110).

6. Accessoire d'angle (100) selon l'une des deux revendications précédentes, **caractérisé en ce que** la joue (111 ; 121) de chaque volet (110 ; 120) comporte une portion droite (111A ; 121A) et une portion arrondie (111B ; 121B) et chacune des deux ailes (112,113 ; 122,123) de chaque volet (110 ; 120) comporte un bord libre (112B,113B ; 122B,123B) longitudinal droit qui se prolonge par un bord libre (112C,113C ; 122C,123C) latéral arrondi qui se raccorde à un bord libre (111D ; 121D) de ladite portion arrondie (111B ; 121B) de ladite joue (111 ; 121), chacun des éléments saillants (117) et chacune des ouvertures (127) circulaires de chaque volet étant respectivement placés à proximité dudit bord libre (112C,113C ; 122C,123C) latéral arrondi de l'aile correspondante du volet.

7. Accessoire d'angle (100) selon la revendication précédente, **caractérisé en ce que** chaque fente (128) débouche sur ledit bord libre (112C,113C ; 122C,123C) latéral arrondi de l'aile correspondante de chaque volet (110 ; 120) à la jonction avec le bord libre (111D ; 121D) de ladite portion arrondie (111B ; 121B) de la joue (111 ; 121) correspondante du volet.

8. Accessoire d'angle (100) selon l'une des quatre revendications précédentes, **caractérisé en ce que**, dans chaque aile (122,123) du volet (120) correspondant, une patte de montage (122F,123F) élastique est délimitée par un bord (128A) de la fente (128), formant le bord libre d'extrémité de ladite patte de montage, par une partie du bord circulaire (127A) de ladite ouverture (127) circulaire prévue dans ladite aile et par une partie du bord libre (122C,123C) de ladite aile sur lequel débouche ladite fente (128), ces parties dudit bord circulaire (127A) et dudit bord libre (122C,123C) formant les bords longitudinaux parallèles de ladite patte de montage.

9. Accessoire d'angle (100) selon les revendications des cinq revendications précédentes, **caractérisé en ce que** chaque paroi cylindrique (117) formant un élément saillant sur la face intérieure d'une aile du volet correspondant, présente une hauteur maximale (Hmax) du côté de la face intérieure de ladite joue, cette hauteur diminuant progressivement depuis un maximum jusqu'à atteindre une hauteur minimale (Hmin) du côté du bord libre de ladite aile du volet.

## Claims

1. A corner accessory (100) for placing at the junction between at least two ducts (1) that extend in different directions, the accessory comprising two distinct flaps (110,120), one of which includes a projecting element (117) and the other of which includes a circular opening (127) receiving said projecting element to allow said flaps to pivot about a pivot axis (Y), the circular edge (127A) of said opening (127) opening out locally to a straight slot (128) that extends radially relative to the circular edge (127A) of said opening (127) and that opens out into a free edge (112C) of said flap (110), **characterized in that** said projecting element is a cylindrical wall (117) presenting firstly an outside diameter equal, ignoring clearance, to the inside diameter of said circular opening (127) so that during pivoting of one flap relative to the other, the outside face of said cylindrical wall (117) slides over the edge face of the circular edge (127A) of said opening, and presenting secondly a height (H) that varies around its circumference.

2. A corner accessory (100) according to the precedent claim, **characterized in that** said cylindrical wall (117) includes a bulge (117A) projecting outwards and the circular edge (127A) of said opening includes a corresponding setback (127B) in its edge face.

3. A corner accessory (100) according to one of the precedent claims, **characterized in that** said circular opening (127) presents an inside diameter lying in the range 2 cm to 4 cm, and preferably equal to about 3 cm.

4. A corner accessory (100) according to one of the precedent claims, **characterized in that** each flap (110;120) comprises a web (111;121) lying between two facing flanges (112,113;122,123) extending substantially at right angles to said web (111;121) from to opposite sides thereof, said projecting element (117) being provided on the inside face (113D) of a flange (113) of the flap (110) that partially covers the flange (122) provided with said circular opening (127) of the other flap (120).

5. A corner accessory (100) according to the precedent claim, **characterized in that** on the facing inside faces (112D,113D) of its flanges (112,113), one (110) of said flaps carries two facing elements (117), and correspondingly, in its flanges (123,122), the other (120) of said flaps includes said circular openings (127) that open out via said slots (128) to free edges (123C,122C) of the flap that are covered by the flanges (112,113) of the first flap (110).

6. A corner accessory (100) according to one of the two precedent claims, **characterized in that** the web (11;121) of each flap (110;120) comprises a straight portion (111A;121A) and a rounded portion (111B;121B), and each of the two flanges (112,113;122,123) of each flap (110;120) includes a straight free edge (112B,113B;122B,123B) that extends longitudinally and runs into a rounded free edge (112C,113C;122C,123C) at the side connecting to a free edge (111D;121D) of said rounded portion (111B;121B) of said web (111;121), each of the projecting elements (117) and each of the circular openings (127) of each flap being placed respectively in the proximity of said rounded free edge (112C,113C;122C,123C) at the side of the corresponding flange of the flap.

7. A corner accessory (100) according to the precedent claim, **characterized in that** each slot (128) opens out into said rounded free edge (112C,113C;122C,123C) at the side of the corresponding flange of each flap (110;120) at the junction with the free edge (111D;121D) of said rounded portion (111B;121B) of the corresponding web (111;121) of the flap.

8. A corner accessory (100) according to one of the four precedent claims, **characterized in that**, in each flange (122;123) of the corresponding flap (120), a resilient assembly tab (122F,123F) is defined by one edge (128A) of the slot (128) forming the free edge at the end of said assembly tab, by a portion of the circular edge (127A) of said circular opening (127) provided in said flange, and by a portion of the free edge (122C,123C) of said flange into which said slot (128) opens out, said portions of said circular edge (127A) and of said free edge (122C,123C) forming the parallel longitudinal edges of said assembly tab.

9. A corner accessory (100) according to one of the five precedent claims, **characterized in that** each cylindrical wall (117) forming a projecting element on the inside face of a flange of the corresponding flap presents a maximum height (Hmax) beside the inside face of said web, said height decreasing progressively from a maximum to reach a minimum height (Hmin) beside the free edge of said flange of the flap.

## Patentansprüche

1. Winkelzubehör (100), das an der Verbindung von mindestens zwei unterschiedlich ausgerichteten Kabelkanälen (1) anzubringen ist, das zwei individuelle Teile (110, 120) umfasst, wobei eines ein hervorstehendes Element (117) und das andere eine kreisrunde Öffnung (127) zur Aufnahme des hervorstehenden Elementes umfasst, um ein Schwenken dieser beiden Teile um eine Schwenkachse (Y) zuzulassen, wobei der kreisrunde Rand (127A) der Öffnung (127) sich an einer Stelle zu einem geraden Schlitz (128) hin öffnet, welcher sich in Bezug zum kreisrunden Rand (127A) dieser Öffnung (127) radial erstreckt und in einen freien Rand (112C) des Teils (110) mündet, **dadurch gekennzeichnet, dass** das hervorstehende Element eine zylinderförmige Wand (117) ist, die zum einen einen Außendurchmesser aufweist, der abgesehen von einem kleinen Spiel dem Innendurchmesser dieser kreisrunden Öffnung (127) entspricht, sodass beim Schwenken eines Teils in Bezug zum anderen die Außenseite der zylinderförmigen Wand (117) auf der Seite des kreisrunden Randes (127A) der Öffnung (127) gleitet und zum anderen eine Höhe (H) aufweist, die entlang ihres Umfangs variiert.

2. Winkelzubehör (100) nach vorausgehendem Anspruch, **dadurch gekennzeichnet, dass** die zylinderförmige (117) Wand eine nach außen vorspringende Nabe (117A) hat und der kreisrunde Rand (127A) der Öffnung an seiner Seite eine dementsprechende Vertiefung (127B) aufweist.

3. Winkelzubehör (100) nach einem der vorausgehenden Ansprüche, **dadurch gekennzeichnet, dass** die kreisrunde Öffnung (127) einen Innendurchmesser zwischen 2 und 4 cm aufweist, vorzugsweise einen Innendurchmesser von 3 cm.

4. Winkelzubehör (100) nach einem der vorausgehenden Ansprüche, **dadurch gekennzeichnet, dass** jedes Teil (110, 120) eine Backe (111, 121) umfasst, die auf zwei entgegengesetzten Seiten von zwei gegenüberliegenden Flügeln (112,113; 122,123) in etwa im rechten Winkel zur Backe (111; 121) eingefasst ist, wobei das hervorstehende Element (117) auf der Innenseite (113D) eines Flügels (113) des Teils (110) vorgesehen ist, der den Flügel (122) mit der kreisrunden Öffnung (127) des anderen Teils (120) teilweise abdeckt.

5. Winkelzubehör (100) nach vorausgehendem Anspruch, **dadurch gekennzeichnet, dass** eines (110) dieser Teile an den Innenseiten (112D, 113D) gegenüber seiner Flügel (112, 113) zwei gegenüberliegende hervorstehende Elemente (117) aufweist, und das andere (120) dieser Teile dementsprechend in seinen Flügeln (123, 122) die kreisrunden Öffnungen (127) aufweist, die sich über die Schlitze (128) zu freien Rändern (123C, 122C) des Teils öffnen, die von den Flügeln (112, 113) des ersten Teils (110) abgedeckt sind.

6. Winkelzubehör (100) nach einem der zwei vorausgehenden Ansprüche, **dadurch gekennzeichnet, dass** die Backe (111, 121) jedes Teils (110, 120) einen geraden Abschnitt (111A, 121A) und einen abgerundeten Abschnitt (111B, 121B) und jeder dieser beiden Flügel (112,113; 122,123) jedes Teils (110;120) einen freien geraden Längsrand (112B, 113B; 122B,123B) aufweist, der durch einen freien abgerundeten Seitenrand (112C,113C; 122C,123C) verlängert wird, welcher sich einem freien Rand (111D, 121D) des abgerundeten Abschnitts (111B,121B) der Backe (111,121) anschließt, wobei jedes der hervorstehenden Elemente (117) und alle kreisrunden Öffnungen (127) jedes Teils jeweils in der Nähe des abgerundeten freien Seitenrandes (112C,113C; 122C,123C) des dem Teil entsprechenden Flügels angeordnet ist.

7. Winkelzubehör (100) nach vorausgehendem Anspruch, **dadurch gekennzeichnet, dass** jeder Schlitz (128) in den abgerundeten freien Seitenrand (112C, 113C; 122C,123C) des entsprechenden Flügelsjedes Teils (110; 120) an der Verbindung mit dem freien Rand (111D, 121D) des abgerundeten Abschnitts (111B, 121B) der entsprechenden Backe (111; 121) des Teils mündet.

8. Winkelzubehör (100) nach einem der vier vorausgehenden Ansprüche, **dadurch gekennzeichnet, dass** in jedem Flügel (122,123) des entsprechenden Teils (120) eine elastische Montagezunge (122F, 123F) durch einen Rand (128A) des Schlitzes (128), der den freien Endrand der Montagezunge bildet, durch einen Teil des kreisrunden Randes (127A) dieser kreisrunden Öffnung (127) in diesem Flügel und durch einen Teil des freien Randes (122C,123C) dieses Flügels, in den dieser Schlitz (128) mündet, abgegrenzt ist, wobei diese Teile des kreisrunden Randes (127A) und des freien Randes (122C,123C) die zur Montagezunge parallelen Längsränder bilden.

9. Winkelzubehör (100) nach den fünf vorausgehenden Ansprüchen, **dadurch gekennzeichnet, dass** jede zylinderförmige Wand (117), die auf der Innenseite eines Flügels des entsprechenden Teils ein hervorstehendes Element bildet, auf der Innenseite dieser Backe eine maximale Höhe (Hmax) aufweist, wobei diese Höhe von einem Maximum ausgehend bis zu einer minimalen Höhe (Hmin) auf der Seite des freien Randes des Flügels des Teils progressiv abnimmt.
